(19) Europäisches Patentamt
European Patent Office
Office européen des brevets

(11) **EP 2 912 423 B1**

(12) **FASCICULE DE BREVET EUROPEEN**

(45) Date de publication et mention
de la délivrance du brevet:
**24.08.2016 Bulletin 2016/34**

(21) Numéro de dépôt: **13779599.3**

(22) Date de dépôt: **22.10.2013**

(51) Int Cl.:
***G01J 11/00*** *(2006.01)*

(86) Numéro de dépôt international:
**PCT/EP2013/072014**

(87) Numéro de publication internationale:
**WO 2014/064068 (01.05.2014 Gazette 2014/18)**

(54) **DISPOSITIF DE TRAITEMENT D'UNE IMPULSION OPTIQUE POUR MESURER LE CONTRASTE DE CELLE-CI, ET SYSTÈME DE MESURE DU CONTRASTE UTILISANT LE DISPOSITIF**

VORRICHTUNG ZUR VERARBEITUNG VON OPTISCHEN PULSEN ZUR MESSUNG DES KONTRASTES UND SYSTEM ZUR MESSUNG DES KONTRASTES MIT DER VORRICHTUNG

DEVICE FOR PROCESSING AN OPTICAL PULSE IN ORDER TO MEASURE THE CONTRAST THEREOF, AND SYSTEM FOR MEASURING THE CONTRAST USING THE DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.10.2012 FR 1260137**

(43) Date de publication de la demande:
**02.09.2015 Bulletin 2015/36**

(73) Titulaire: **Commissariat à l'Énergie Atomique et aux Énergies Alternatives**
**75015 Paris (FR)**

(72) Inventeur: **DUBERTRAND, Jérôme**
**F-33380 Mios (FR)**

(74) Mandataire: **Brevalex**
**95, rue d'Amsterdam**
**75378 Paris Cedex 8 (FR)**

(56) Documents cités:
**FR-A1- 2 899 328**

• **DONGFANG ZHANG ET AL: "Fiber-array-based detection scheme for single-shot pulse contrast characterization", OPTICS LETTERS, OSA, OPTICAL SOCIETY OF AMERICA, WASHINGTON, DC, US, vol. 33, no. 17, 1 septembre 2008 (2008-09-01), pages 1969-1971, XP001516857, ISSN: 0146-9592, DOI: 10.1364/OL.33.001969**

**Description**

**DOMAINE TECHNIQUE**

La présente invention concerne un dispositif de traitement d'une impulsion optique pour mesurer le contraste temporel de celle-ci, ainsi qu'un système de mesure du contraste, à grande dynamique (en anglais, *dynamic range*), utilisant le dispositif.

L'invention s'applique plus particulièrement à la mesure de contrastes temporels de grande dynamique, supérieure à $10^5$, sur des impulsions monocoup.

L'invention est notamment utilisable pour effectuer des mesures de contraste temporel sur les impulsions fournies par des lasers de puissance tels que le laser Mégajoule par exemple.

**ÉTAT DE LA TECHNIQUE ANTÉRIEURE**

Pour mesurer le contraste temporel d'une impulsion optique, on utilise le plus souvent un photodétecteur associé à un oscilloscope. Une telle technique présente un inconvénient : avec elle, la dynamique de mesure n'est pas très élevée. Par exemple, un oscilloscope dont la bande passante est égale à 6 GHz ne possède qu'une dynamique effective d'environ 7 bits c'est-à-dire d'environ $10^2$.

On connaît aussi un système permettant d'accéder à des mesures de formes temporelles de grande dynamique, à partir d'impulsions monocoup. Au sujet de ce système, on se reportera aux documents suivants :

[1] FR 2 899 328, Dispositif entièrement optique de découpage de la dynamique d'un signal optique et système de mesure du signal, utilisant ce dispositif,
[2] US 8 095 017, Fully optical device for breaking down the dynamic range of an optical signal and system for measuring the signal using the device, correspondant au document [1].

Le principe de ce système consiste à faire des répliques de l'impulsion optique étudiée à l'aide de coupleurs optiques. Le niveau de chaque réplique est ajusté pour caractériser une portion de l'impulsion. Et les répliques sont décalées temporellement les unes par rapport aux autres puis recombinées et analysées. En mode de fonctionnement monocoup, ce système permet de mesurer des contrastes de $10^3$.

Ce système connu permet la mesure d'une forme temporelle d'une impulsion de grande dynamique en continu ; mais il ne permet pas de mesurer des contrastes supérieurs à $10^3$. En effet, les signaux qui sont envoyés sur le photodétecteur dont il est pourvu sont très proches de la saturation de ce photodétecteur.

Ce dernier met donc un certain temps avant de retrouver son état nominal. Et les signaux permettant d'observer la partie basse de la dynamique de la forme temporelle de l'invention saturent fortement le calibre de l'oscilloscope qui est associé au photodétecteur.

Pour obtenir la dynamique maximale avec ce système connu, il est nécessaire que l'impulsion à caractériser ait une puissance crête de l'ordre de 400 mW : si la puissance crête du signal d'entrée est supérieure à cette valeur, le photodétecteur sera saturé et si elle lui est inférieure, le contraste sera dégradé.

Un autre système ayant le même but est divulgué dans le document «Fibre-array-based detection scheme for single-shot pulse contrast characterisation». Optics Letters Vol.33, No17, September 1, 2008, pages 1969-1971.

**EXPOSÉ DE L'INVENTION**

La présente invention a pour but de remédier aux inconvénients précédents.

Dans l'invention, il s'agit encore de créer des répliques d'une impulsion ; mais le pic de l'impulsion est écrêté par passage dans un dispositif de modulation.

La mesure de contraste, de grande dynamique, est rendue possible par l'association de différents composants optiques. La combinaison de ces derniers à des moyens électroniques et à une mise en oeuvre spécifiques rend l'invention simple d'utilisation.

De façon précise, la présente invention a pour objet un dispositif de traitement d'une impulsion optique, pour mesurer le contraste temporel de celle-ci, l'impulsion optique comportant un piédestal et un pic principal, également appelé impulsion principale, sur le piédestal, le dispositif étant caractérisé en ce qu'il comprend :

- un dispositif optique de séparation, comportant une voie d'entrée pour recevoir l'impulsion optique, et des première et deuxième voies de sortie pour fournir respectivement le pic principal et au moins une partie du piédestal, partie qui est utilisée pour la mesure du contraste temporel,
- un dispositif de décalage temporel pour décaler temporellement le pic principal et la partie du piédestal l'un par rapport à l'autre,
- un dispositif d'atténuation pour atténuer le pic principal de façon que les niveaux respectifs du pic principal et de la partie du piédestal soient du même ordre de grandeur, et
- un dispositif de multiplexage optique pour multiplexer le pic principal ainsi atténué et la partie du piédestal ainsi décalée temporellement par rapport au pic principal, le contraste étant alors égal au rapport de la mesure du niveau du pic principal à la mesure du niveau de la partie du piédestal, les niveaux du pic principal et de la partie du piédestal étant corrigés des atténuations qu'ils ont respectivement subies dans le dispositif de traitement.

Selon un premier mode de réalisation particulier du dispositif, objet de l'invention, le dispositif optique de séparation comprend les caractéristiques de la revendication 1.

Le dispositif, objet de l'invention, peut alors comprendre en outre un dispositif de déclenchement pour déclencher le dispositif de modulation par le pic principal de l'impulsion optique.

De préférence, ce dispositif de déclenchement comprend :

- un coupleur optique pour prélever une partie de la première réplique, et
- un dispositif de conversion opto-électrique qui reçoit la partie ainsi prélevée et fournit un signal électrique, représentatif de celle-ci,

et le dispositif de modulation est commandé par le signal électrique.

Le signal de commande, appliqué au dispositif de modulation d'amplitude optique, a de préférence une durée suffisante pour que ce dispositif de modulation d'amplitude optique élimine également la partie de l'impulsion optique dans laquelle la première réplique de l'impulsion optique va se recombiner au signal de sortie du dispositif de modulation d'amplitude optique.

De préférence, le signal de commande du dispositif de modulation d'amplitude optique est proportionnel à l'impulsion optique.

Selon un deuxième mode de réalisation particulier du dispositif, objet de l'invention, le dispositif optique de séparation comprend les caractéristiques de la revendication 6.

Selon un mode de réalisation préféré du dispositif, objet de l'invention, le dispositif de décalage temporel comprend une fibre optique.

De préférence, le dispositif de multiplexage comprend un coupleur optique.

Selon un mode de réalisation préféré de l'invention, le dispositif d'atténuation est accordable.

La présente invention concerne aussi un système de mesure du contraste temporel d'une impulsion optique, comprenant :

- le dispositif de traitement de l'impulsion optique, objet de l'invention,
- un dispositif de photodétection pour détecter le pic principal et la partie du piédestal qui ont été multiplexés et pour fournir un signal électrique qui est représentatif des niveaux respectifs du pic principal et de la partie de piédestal, et
- un dispositif électronique de traitement pour traiter le signal électrique afin de déterminer la valeur du contraste.

De préférence, le dispositif électronique de traitement comprend un oscilloscope ou un numériseur.

## BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :

- la figure 1 est une vue schématique d'un premier mode de réalisation particulier du dispositif, objet de l'invention,
- la figure 2 illustre schématiquement la possibilité de mesurer le contraste d'une impulsion présentant un fond continu non négligeable à l'aide du dispositif représenté sur la figure 1,
- la figure 3 illustre schématiquement un exemple d'impulsion laser dont on veut mesurer le contraste temporel,
- la figure 4 illustre schématiquement le signal obtenu à la sortie du modulateur que comporte le dispositif de la figure 1, si l'on écrête le pic principal de cette impulsion laser, et
- la figure 5 est une vue schématique d'un deuxième mode de réalisation particulier du dispositif, objet de l'invention.

## EXPOSÉ DÉTAILLÉ DE MODES DE RÉALISATION PARTICULIERS

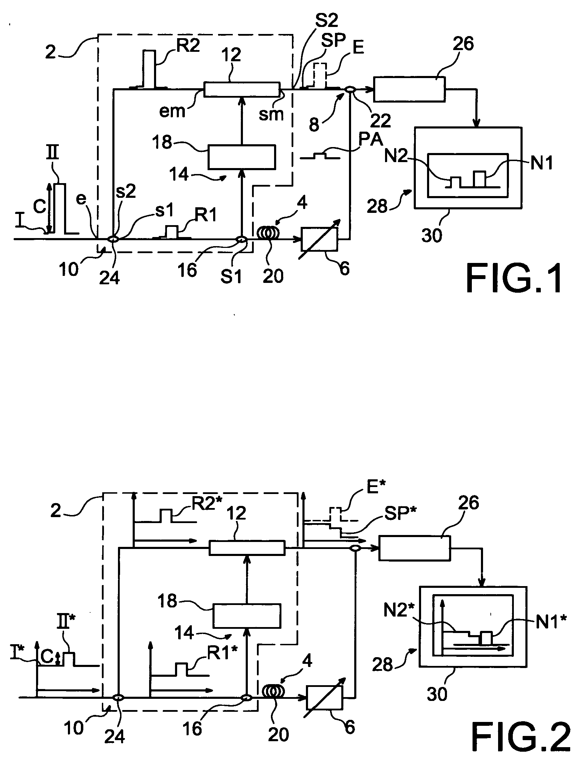

La figure 1 est une vue schématique d'un mode de réalisation particulier du dispositif, objet de l'invention. Ce dispositif est entièrement fibré et destiné à traiter une impulsion laser pour en mesurer le contraste temporel en régime monocoup ou récurrent.

Sur la figure 1, on voit aussi un système conforme à l'invention, permettant de mesurer le contraste temporel C de l'impulsion laser. Cette dernière comporte un piédestal I dont l'intensité est différente de zéro, ainsi qu'un pic principal II sur le piédestal I.

Le système permet notamment de mesurer des contrastes temporels avec un rapport pic-palier supérieur à $10^5$ en régime récurrent ou en régime monocoup, sur des impulsions laser nanoseconde.

Le dispositif et le système qui sont représentés sur la figure 1 peuvent être adaptés à une large gamme spectrale et à divers types d'impulsions, en adaptant leurs éléments constitutifs à celles-ci.

Le principe du dispositif consiste à diviser l'impulsion en deux signaux qui se propagent sur deux voies de mesure et qui sont identiques mais plus ou moins atténués suivant la voie de mesure considérée. L'une des voies est utilisée pour effectuer la mesure du piédestal I de l'impulsion et l'autre voie, pour la mesure du pic II.

Pour mesurer le piédestal sans être gêné par le pic, on élimine ce dernier grâce à un dispositif de modulation d'amplitude optique qui ne laisse passer que le piédestal (ou, plus exactement, au moins une partie de ce piédestal, partie qui est utilisée pour la mesure du contraste temporel). Enfin, on recombine puis on analyse les signaux.

Grâce à ce dispositif et au système qui l'inclut, on peut mesurer des contrastes jusqu'à plus de $10^5$. Cette limite ($10^5$) est imposée par le taux d'extinction d'un dispositif de modulation simple qui permet de supprimer le pic sur l'une des voies de mesure. Mais cette limite peut être repoussée en utilisant un dispositif de modulation composé, par exemple un dispositif de modulation double.

Toutefois, il est alors notamment nécessaire d'augmenter la puissance de l'impulsion optique étudiée et la sensibilité du photodétecteur que l'on amené à utiliser à la suite du dispositif de traitement de l'impulsion.

Plus précisément, le dispositif de traitement d'une impulsion laser, qui est schématiquement représenté sur la figure 1, comprend un dispositif optique de séparation 2, comportant une voie d'entrée e pour recevoir l'impulsion optique, et des première et deuxième voies de sortie S1, S2 pour fournir respectivement le pic principal et au moins une partie du piédestal, partie qui est utilisée pour la mesure du contraste temporel.

Le dispositif de traitement comprend aussi un dispositif de décalage temporel 4 pour décaler temporellement le pic principal et la partie du piédestal l'un par rapport à l'autre.

En outre, le dispositif de traitement comprend un dispositif d'atténuation 6 pour atténuer le pic principal de façon que les niveaux respectifs du pic principal et de la partie du piédestal soient du même ordre de grandeur, et un dispositif de multiplexage optique 8 pour multiplexer le pic principal ainsi atténué et la partie du piédestal ainsi décalée temporellement par rapport au pic principal. On reviendra sur les caractéristiques de ce dispositif 8 par la suite.

Le signal issu de l'atténuateur et correspondant au pic atténué a la référence PA sur la figure 1.

Le contraste est alors égal au rapport de la mesure du niveau du pic principal à la mesure du niveau de la partie du piédestal. Avant de déterminer ce rapport, les niveaux du pic principal et de la partie du piédestal sont corrigés des atténuations qu'ils ont respectivement subies dans le dispositif de traitement.

Dans l'exemple représenté sur la figure 1, le dispositif optique de séparation 2 comprend un dispositif de division optique 10 à une entrée constituant la voie d'entrée e, qui reçoit l'impulsion laser, et des première et deuxième sorties s1, s2 pour fournir respectivement des première et deuxième répliques R1, R2 de l'impulsion laser. La première sortie s1 est reliée à la première voie de sortie S1 (par l'intermédiaire d'une fibre optique). On reviendra sur les caractéristiques de ce dispositif 10 par la suite.

Le dispositif optique de séparation 2 comprend aussi un dispositif de modulation d'amplitude optique 12. Ce dernier a une entrée em reliée à la deuxième sortie s2 (par l'intermédiaire d'une fibre optique), et une sortie sm reliée à la deuxième voie de sortie S2. Ce dispositif de modulation 12 est prévu pour éliminer le pic principal de la deuxième réplique et ne laisser passer que la partie du piédestal, lorsqu'un signal de commande, prévu à cet effet, lui est appliqué.

Sur la figure 1, on voit le signal SP correspondant à la partie du piédestal que le dispositif de modulation laisse passer; et les pointillés E symbolisent le pic éliminé.

Dans l'exemple représenté sur la figure 1, le dispositif de modulation 12 est un dispositif de modulation électro-optique. On peut aussi utiliser un dispositif de modulation acousto-optique mais les performances de ce dernier sont moins bonnes : il est moins rapide qu'un dispositif de modulation électro-optique pour supprimer une impulsion lumineuse.

Dans l'exemple représenté sur la figure 1, le dispositif de traitement comprend en outre un dispositif de déclenchement 14 pour déclencher le modulateur 12 par le pic principal II de l'impulsion laser (plus précisément, par la première réplique R1 de l'impulsion laser dans le cas de la figure 1).

Ce dispositif de déclenchement 14 comprend un coupleur optique 16 pour prélever une partie de la première réplique R1, et un dispositif de conversion opto-électrique 18 qui reçoit la partie ainsi prélevée et fournit un signal électrique représentatif de celle-ci. Comme on le voit, le dispositif de modulation d'amplitude 12 est commandé parce signal électrique.

Revenons sur le dispositif de déclenchement 14.

Il faut envoyer un signal de commande au dispositif de modulation 12 pour qu'il écrête l'impulsion laser qui lui parvient, c'est-à-dire pour qu'il en supprime le pic principal, à partir du moment où il reçoit le signal de commande.

Certes, il est possible de déclencher le dispositif de modulation 12 par un signal de synchronisation externe, qui est synchrone du laser (non représenté) qui émet l'impulsion ou les impulsions dont on veut mesurer le contraste.

Mais il est préférable de le déclencher de façon interne, en utilisant un dispositif de synchronisation afin de ne pas avoir besoin de gérer les retards à appliquer au signal de déclenchement. C'est ce que l'on fait dans le cas du dispositif représenté sur la figure 1, qui comporte le coupleur 16 et le dispositif de conversion opto-électrique 18 pour commander le dispositif de modulation 12.

On peut utiliser un coupleur 16 asymétrique, par exemple de type 90/10, qui envoie 10% de l'énergie optique qui lui parvient vers le dispositif de conversion 18. Compte tenu de l'intensité élevée du pic II, un coupleur symétrique, de type 50/50, est également utilisable ; mais dans ce cas, le dispositif d'atténuation 6 est choisi pour atténuer plus faiblement l'impulsion qui lui parvient.

De plus, l'utilisation du coupleur 16 et du dispositif de conversion 18 entraîne un retard de la commande du dispositif de modulation 12. On peut alors être amené à insérer une fibre optique de retardement dans la ligne optique qui mène au dispositif de modulation pour éviter que la commande d'écrêtage ne lui parvienne trop tard.

Dans l'exemple représenté, le dispositif de décalage temporel 4 comprend une fibre optique 20. Et le dispositif de multiplexage 8, ainsi que le dispositif de division optique 10 comprennent respectivement des coupleurs optiques 22 et 24. En outre, le dispositif d'atténuation 6 est accordable.

On précise que l'ordre des dispositifs 4 et 6 pourrait être inversé : le dispositif d'atténuation 6 pourrait précéder le dispositif de décalage temporel 4 au lieu de suivre ce dernier.

Revenons sur les caractéristiques des dispositifs 8 et 10, comprenant les coupleurs 22 et 24 dans l'exemple décrit.

Etant donné que l'intensité optique du pic principal II est très supérieure à celle du piédestal I, on cherche à avoir une intensité optique aussi élevée que possible sur la voie correspondant au piédestal et à la sortie de cette voie. C'est pourquoi on choisit de préférence des coupleurs très asymétriques, par exemple des coupleurs 90/10.

Pour le coupleur 22, cela signifie que 90% de l'intensité optique qui en sort provient du modulateur et que le reste (10%) provient de l'atténuateur. Et pour le coupleur 24, cela signifie que 90% de l'intensité optique qui lui parvient est envoyée vers le dispositif de modulation et que le reste (10%) est envoyé vers l'atténuateur.

Certes, on pourrait utiliser des coupleurs symétriques 50/50 mais on ne pourrait alors mesurer que des contrastes inférieurs à $10^5$.

Le système de mesure du contraste temporel de l'impulsion laser, représenté sur la figure 1, comprend le dispositif de traitement de l'impulsion laser, que l'on vient de décrire, et un dispositif de photodétection 26 pour détecter le pic principal et la partie du piédestal qui ont été multiplexés et pour fournir un signal électrique qui est représentatif des niveaux respectifs N1, N2 du pic principal et de la partie de piédestal.

Ce système comprend aussi un dispositif électronique de traitement 28 pour traiter le signal électrique afin de déterminer la valeur du contraste C. Dans l'exemple représenté, ce dispositif de traitement 28 comprend un oscilloscope 30. Au lieu de ce dernier, on pourrait également utiliser un numériseur.

On précise que le dispositif d'atténuation 6 est un atténuateur à fibre optique (en anglais, *fiber-optic attenuaror*). Il a pour fonction d'atténuer l'intensité du pic, plus précisément l'intensité du signal optique R1 afin que l'amplitude de ce signal soit du même ordre de grandeur que l'amplitude du piédestal à l'arrivée au dispositif de photodétection 26.

Dans l'exemple, il s'agit d'un atténuateur accordable ou atténuateur variable. Il est possible d'utiliser un atténuateur fixe, c'est-à-dire un atténuateur qui n'est pas accordable ; mais le domaine d'utilisation du système est alors borné. Ceci est possible si l'on connaît l'ordre de grandeur du contraste temporel à mesurer.

A titre purement indicatif et nullement limitatif, on souhaite mesurer un contraste de $10^5$ avec une impulsion dont la puissance-crête vaut 500 mW et l'on utilise les valeurs numériques suivantes :

- taux de couplage des coupleurs 22 et 24 : 90/10
- pertes d'insertion optiques du dispositif de modulation 12 : 6 dB
- sensibilité du dispositif de photodétection 26 : 600 mV/mW
- atténuateur variable 6 : 34 dB

Il en résulte des pertes optiques ILI environ égale à 7 dB sur la voie du dispositif correspondant au piédestal I, et des pertes optiques ILII environ égale à 54 dB sur la voie correspondant à l'impulsion II.

Alors, les valeurs que l'on mesure à l'aide de l'oscilloscope 30 sont :

- VI = 0,6 mV pour la voie correspondant au piédestal
- VII = 1,2 mV pour la voie correspondant au pic.

On en déduit le contraste C :

$$C = \frac{VII x 10^{\left(\frac{ILII}{10}\right)}}{VI x 10^{\left(\frac{ILI}{10}\right)}} = \frac{(1,2 x 10^{-3}) x 10^{5,4}}{(0,6 x 10^{-3}) x 10^{0,7}}$$

C est donc peu différent de 50 dB.

Le paramètre qui limite le système est le bruit de l'oscilloscope qui est de l'ordre d'une centaine de microvolts (200 µV crête-à-crête). Pour qu'une mesure de contraste soit réalisable, il faut que l'intensité du signal correspondant au piédestal soit supérieure à cette valeur.

Le dispositif que l'on a décrit en faisant référence à la figure 1 peut être adapté en fonction des besoins :

- on peut choisir les taux de couplage des coupleurs 22 et 24 (et du coupleur 16 lorsqu'il est présent),
- le retard peut avoir lieu sur une voie ou sur l'autre : on peut retarder le pic par rapport au piédestal (en plaçant le dispositif de décalage temporel 4 sur la voie correspondant au pic - cas de la figure 1) ou retarder le piédestal par rapport au pic (en plaçant le dispositif de décalage temporel 4 sur la voie correspondant au piédestal),
- on peut prévoir une atténuation variable en ligne pour s'adapter au contraste à mesurer; on utilise alors un atténuateur variable (atténuateur accordable), ce qui est le cas pour le dispositif de la figure 1,
- on peut utiliser un dispositif de modulation composé pour améliorer le taux d'extinction de ce dispositif de modulation : le dispositif de modulation 12 est un dispositif de modulation simple, par exemple un dispositif de modulation de Mach-Zehnder, mais pourrait être remplacé par un dispositif de modulation composé, par exemple un dispositif de modulation double, qui peut comprendre deux dispositifs de modulation de Mach-Zehnder, ce qui permet de mieux supprimer un pic élevé,

- on peut prévoir une synchronisation interne du système de mesure par détection de l'impulsion optique (cas de la figure 1),
- on peut choisir la sensibilité du dispositif de photodétection 26.

On précise ci-après divers aspects du système représenté sur la figure 1.

Le niveau du piédestal est mesurable à condition qu'il soit encore présent par rapport au pic à une durée supérieure au temps de réponse du modulateur.

Le système représenté sur la figure 1 est un système entièrement fibré. Cela impose que le signal à caractériser soit transporté par une fibre optique.

Ce système permet de mesurer des contrastes temporels supérieurs à $10^5$ (50 dB). En fait, cela dépend du niveau du signal d'entrée : plus ce niveau est important plus le contraste mesurable est important.

L'utilisation du même calibre sur l'oscilloscope apporte une meilleure précision sur la mesure : on s'affranchit de la linéarité inter-calibre.

Ce système utilise des composants actifs et doit donc être calibré.

Ce système peut être autonome et se synchroniser par lui-même ; en variante, il peut être synchronisé par l'utilisateur.

Ce système peut être rendu compact et donc facilement transportable.

Il peut également servir à mesurer le contraste d'une impulsion qui présente un fond continu non négligeable. Ceci est schématiquement illustré par la figure 2 où l'on retrouve le système qui a été décrit en faisant référence à la figure 1, mais à l'entrée duquel se présente une impulsion laser dont le piédestal I* n'est pas négligeable par rapport au pic II*.

Sur la figure 2, les signaux correspondant à ceux de la figure 1 portent les mêmes références, suivies du symbole « * ».

Le signal électrique appliqué au dispositif de modulation 12 a, de préférence, une durée suffisante pour que le modulateur écrête également la zone de l'impulsion laser dont on veut mesurer le contraste C, zone dans laquelle le signal optique, issu de la voie de sortie S1, va se recombiner au signal ayant traversé le dispositif de modulation 12, c'est-à-dire le signal issu de la voie de sortie S2.

En effet, on peut être amené non seulement à écrêter le pic principal de l'impulsion mais aussi à éliminer d'autres parties de cette impulsion.

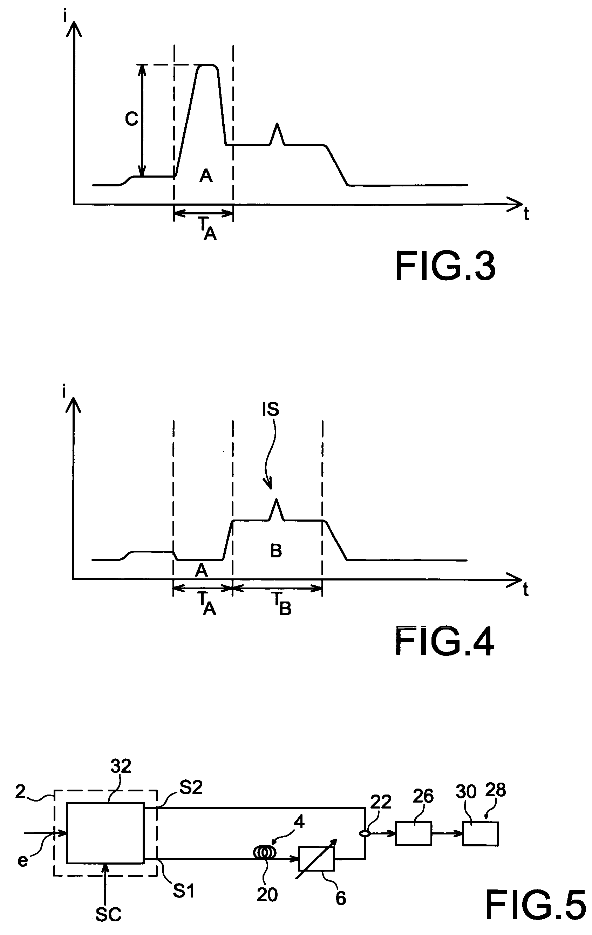

A titre d'exemple, considérons l'impulsion laser dont l'allure est schématiquement illustrée par la figure 3 et dont on veut mesurer le contraste temporel C. Le temps $t$ est porté en abscisses et l'intensité lumineuse $i$ en ordonnées.

Si l'on écrête seulement le pic principal (zone A, délimitée par des pointillés), on aura le signal schématiquement illustré par la figure 4 à la sortie du dispositif de modulation 12. On note la présence d'un fond continu et/ou d'une autre impulsion IS sur l'impulsion étudiée. Cette autre impulsion IS est dans la zone B, qui est délimitée par des pointillés et voisine de la zone A.

La zone B correspond à l'endroit où doit venir se recombiner le pic et, dans cette zone B, le signal n'est pas négligeable et peut influencer la mesure du pic et donc la mesure du contraste C.

En conséquence, il est préférable

- soit d'appliquer, au dispositif de modulation 12, un premier signal électrique pour écrêter la totalité du pic principal, et un deuxième signal électrique pour éteindre le signal optique à l'instant où le signal PA, issu de l'atténuateur 6, doit venir se recombiner au dispositif de modulation 12 (voie de sortie S2),
- soit d'appliquer, au dispositif de modulation 12, un signal électrique de durée $T_A + T_B$ qui est équivalente à la durée $T_A$ du pic principal, augmentée de la durée $T_B$ correspondant à la zone B.

Cela permet d'écrêter le pic principal quel que soit le type de l'impulsion laser étudiée.

Le signal électrique de commande, qui est appliqué au dispositif de modulation 12, est avantageusement proportionnel à la forme de l'impulsion laser à mesurer. Cela permet, entre autres, de mettre en oeuvre la technique que l'on vient de décrire en faisant référence aux figures 3 et 4.

Pour obtenir un tel signal électrique, on peut procéder de la façon suivante :

On précise d'abord que le dispositif de conversion opto-électrique 18 comprend, de façon classique, une photodiode associée à un premier circuit électronique ; le dispositif de modulation comprend, de façon classique, un modulateur d'amplitude optique qui est lui-même associé à un deuxième circuit électronique ; et le premier circuit fournit un signal électrique servant à déclencher le deuxième circuit.

Alors, pour obtenir le signal proportionnel à la forme de l'impulsion laser, il est possible de :

- remplacer le dispositif de conversion opto-électrique 18, ayant la structure mentionnée ci-dessus, par un dispositif de conversion opto-électrique comprenant la photodiode associée à un circuit électronique constitué par un générateur programmable de forme électrique, et
- remplacer le dispositif 12 par un simple modulateur d'amplitude optique que l'on commande par le signal électrique fourni en sortie par le générateur programmable de forme électrique.

Un autre mode de réalisation particulier du dispositif de traitement de l'impulsion laser est schématiquement illustré par la figure 5.

Dans cet autre exemple, le dispositif optique de séparation 2 comprend un modulateur d'amplitude optique 32 ayant une entrée, qui constitue la voie d'entrée e pour recevoir l'impulsion optique, et des première et deuxième sorties qui sont complémentaires l'une de l'autre et constituent respectivement les première et deuxième voies de sortie S1 et S2 pour fournir respectivement le pic principal et la partie du piédestal, lorsqu'un signal de commande SC prévu à cet effet est appliqué au modulateur 32.

Comme on le voit, dans cet autre exemple, le reste du système de mesure est inchangé : on retrouve la fibre optique 20, l'atténuateur 6, le coupleur 22, le dispositif de photodétection 26 et l'oscilloscope 30.

Pour ce qui concerne les modulateurs d'amplitude optique à deux sorties complémentaires l'une de l'autre, on pourra se référer en particulier au document suivant :

[3] US 6 320 692, Biasing System for an optical modulator with double output.

## Revendications

1. Dispositif de traitement d'une impulsion optique, pour mesurer le contraste temporel (C) de celle-ci, l'impulsion optique comportant un piédestal (I) et un pic principal (II) sur le piédestal, le dispositif étant **caractérisé en ce qu'**il comprend :

   - un dispositif optique de séparation (2), comportant une voie d'entrée pour recevoir l'impulsion optique, et des première et deuxième voies de sortie pour fournir respectivement le pic principal et au moins une partie du piédestal, partie qui est utilisée pour la mesure du contraste temporel,
   - un dispositif de décalage temporel (4) pour décaler temporellement le pic principal et la partie du piédestal l'un par rapport à l'autre,
   - un dispositif d'atténuation (6) pour atténuer le pic principal de façon que les niveaux respectifs du pic principal et de la partie du piédestal soient du même ordre de grandeur, et
   - un dispositif de multiplexage optique (8) pour multiplexer le pic principal ainsi atténué et la partie du piédestal ainsi décalée temporellement par rapport au pic principal, le contraste étant alors égal au rapport de la mesure du niveau du pic principal à la mesure du niveau de la partie du piédestal, les niveaux du pic principal et de la partie du piédestal étant corrigés des atténuations qu'ils ont respectivement subies dans le dispositif de traitement,

dans lequel le dispositif optique de séparation (2) comprend :

   - un dispositif de division optique (10) à une entrée constituant la voie d'entrée, qui reçoit l'impulsion optique, et des première et deuxième sorties pour fournir respectivement des première et deuxième répliques de l'impulsion optique, la première sortie étant reliée à la première voie de sortie, et
   - un dispositif de modulation d'amplitude optique (12), ayant une entrée reliée à la deuxième sortie, et une sortie reliée à la deuxième voie de sortie, et prévu pour éliminer le pic principal de la deuxième réplique et ne laisser passer que la partie du piédestal, lorsqu'un signal de commande, prévu à cet effet, lui est appliqué.

2. Dispositif selon la revendication 1, comprenant en outre un dispositif de déclenchement (14) pour déclencher le dispositif de modulation (12) par le pic principal de l'impulsion optique.

3. Dispositif selon la revendication 2, dans lequel le dispositif de déclenchement (14) comprend :

   - un coupleur optique (16) pour prélever une partie de la première réplique, et
   - un dispositif de conversion opto-électrique (18) qui reçoit la partie ainsi prélevée et fournit un signal électrique, représentatif de celle-ci,

   et dans lequel le dispositif de modulation (12) est commandé par le signal électrique.

4. Dispositif selon l'une quelconque des revendications 1 à 3, dans lequel le signal de commande, appliqué au dispositif de modulation d'amplitude optique (12), a une durée suffisante pour que le dispositif de modulation d'amplitude optique (12) élimine également la partie de l'impulsion optique dans laquelle la première réplique de l'impulsion optique va se recombiner au signal de sortie du dispositif de modulation d'amplitude optique (12).

5. Dispositif selon l'une quelconque des revendications 1 à 4, dans lequel le signal de commande du dispositif de modulation d'amplitude optique (12) est proportionnel à l'impulsion optique.

6. Dispositif de traitement d'une impulsion optique, pour mesurer le contraste temporel (C) de celle-ci, l'impulsion optique comportant un piédestal (I) et un pic principal (II) sur le piédestal, le dispositif étant **caractérisé en ce qu'**il comprend :

   - un dispositif optique de séparation (2), comportant une voie d'entrée pour recevoir l'impulsion optique, et des première et deuxième voies de sortie pour fournir respectivement le pic principal et au moins une partie du piédestal, partie qui est utilisée pour la mesure du contraste temporel,

- un dispositif de décalage temporel (4) pour décaler temporellement le pic principal et la partie du piédestal l'un par rapport à l'autre,

- un dispositif d'atténuation (6) pour atténuer le pic principal de façon que les niveaux respectifs du pic principal et de la partie du piédestal soient du même ordre de grandeur, et

- un dispositif de multiplexage optique (8) pour multiplexer le pic principal ainsi atténué et la partie du piédestal ainsi décalée temporellement par rapport au pic principal, le contraste étant alors égal au rapport de la mesure du niveau du pic principal à la mesure du niveau de la partie du piédestal, les niveaux du pic principal et de la partie du piédestal étant corrigés des atténuations qu'ils ont respectivement subies dans le dispositif de traitement,

dans lequel le dispositif optique de séparation (2) comprend un modulateur d'amplitude optique (32), ayant une entrée, qui constitue la voie d'entrée pour recevoir l'impulsion optique, et des première et deuxième

sorties qui sont complémentaires l'une de l'autre et constituent respectivement les première et deuxième voies de sortie pour fournir respectivement le pic principal et la partie du piédestal, lorsqu'un signal de commande, prévu à cet effet, est appliqué au modulateur (32).

7. Dispositif selon l'une quelconque des revendications 1 à 6, dans lequel le dispositif de décalage temporel (4) comprend une fibre optique (20).

8. Dispositif selon l'une quelconque des revendications 1 à 7, dans lequel le dispositif de multiplexage (8) comprend un coupleur optique (22).

9. Dispositif selon l'une quelconque des revendications 1 à 8, dans lequel le dispositif d'atténuation (6) est accordable.

10. Système de mesure du contraste temporel d'une impulsion optique, comprenant :

- le dispositif de traitement de l'impulsion optique selon l'une quelconque des revendications 1 à 9,
- un dispositif de photodétection (26) pour détecter le pic principal et la partie du piédestal qui ont été multiplexés et pour fournir un signal électrique qui est représentatif des niveaux respectifs du pic principal et de la partie de piédestal, et
- un dispositif électronique de traitement (28)

pour traiter le signal électrique afin de déterminer la valeur du contraste.

11. Dispositif selon la revendication 10, dans lequel le dispositif électronique de traitement (28) comprend un oscilloscope (30) ou un numériseur.

**Patentansprüche**

1. Vorrichtung zur Verarbeitung eines optischen Impulses, um den zeitlichen Kontrast (C) von diesem zu messen, wobei der optische Impuls einen Sockel (I) und eine Haupt-Spitze (II) auf dem Sockel umfasst, wobei die Vorrichtung **dadurch gekennzeichnet ist, dass** sie umfasst:

- eine optische Trennvorrichtung (2), umfassend einen Eingangspfad zum Empfangen des optischen Impulses sowie einen ersten und einen zweiten Ausgangspfad, um die Hauptspitze bzw. wenigstens einen Teil des Sockels zu liefern, wobei der Teil für die Messung des zeitlichen Kontrastes verwendet wird,
- eine Vorrichtung zum zeitlichen Versatz (4), um die Hauptspitze und den Teil des Sockels in Bezug zueinander zeitlich zu versetzen,
- eine Dämpfungsvorrichtung (6), um die Hauptspitze auf solch eine Weise zu dämpfen, dass die jeweiligen Niveaus der Hauptspitze und des Teils des So-ckels in der gleichen Größenordnung liegen, und
- eine optische Multiplexvorrichtung (8), um die so gedämpfte Hauptspitze und den in Bezug auf die Hauptspitze so zeitlich versetzten Teil des Sockels zu bündeln, wobei der Kontrast also gleich dem Verhältnis von dem Maß des Niveaus der Hauptspitze zu dem Maß des Niveaus von dem Teil des Sockels ist, wobei die Niveaus der Hauptspitze und des Teils des Sockels um die Dämpfungen korrigiert sind, denen sie jeweils in der Vorrichtung zur Verarbeitung unterzogen wurden,

wobei die optische Trennvorrichtung (2) umfasst:

- eine optische Teilungsvorrichtung (10) mit einem Eingang, welcher den Eingangspfad bildet, der den optischen Impuls empfängt, und mit einem ersten und zweiten Ausgang, um jeweils eine erste und eine zweite Replik des optischen Impulses zu liefern, wobei der erste Ausgang mit dem ersten Ausgangspfad verbunden ist, und
- eine optische Amplitudenmodulationsvorrichtung (12), welche einen mit dem zweiten Ausgang verbundenen Eingang und einen Ausgang aufweist, der mit dem zweiten Ausgangspfad verbunden und dazu vorgesehen ist, die Hauptspitze der zweiten Replik zu eliminieren und nur den Teil des Sockels passieren zu lassen, wenn ein zu diesem Zweck vorgesehenes Steuersignal darauf angewendet wird.

**2.** Vorrichtung nach Anspruch 1, weiter umfassend eine Auslösevorrichtung (14), um die Modulationsvorrichtung (12) durch die Hauptspitze des optischen Impulses auszulösen.

**3.** Vorrichtung nach Anspruch 2, wobei die Auslösevorrichtung (14) umfasst:

- einen optischen Koppler (16), um einen Teil der ersten Replik zu sampeln, und
- eine opto-elektronische Wandelvorrichtung (18), die den so gesampelten Teil empfängt und ein elektrisches Signal liefert, welches repräsentativ für diesen ist,

und wobei die Modulationsvorrichtung (12) durch das elektrische Signal gesteuert wird.

**4.** Vorrichtung nach einem der Ansprüche 1 bis 3, wobei das Steuersignal, welches auf die optische Amplitudenmodulationsvorrichtung (12) angewendet wird, eine hinreichende Dauer aufweist, damit die optische Amplitudenmodulationsvorrichtung (12) ebenfalls den Teil des optischen Impulses eliminiert, in welchem die erste Replik des optischen Impulses sich mit dem Ausgangssignal der optischen Amplitudenmodulationsvorrichtung (12) rekombinieren wird.

**5.** Vorrichtung nach einem der Ansprüche 1 bis 4, wobei das Steuersignal der optischen Amplitudenmodulationsvorrichtung (12) proportional zu dem optischen Impuls ist.

**6.** Vorrichtung zur Verarbeitung eines optischen Impulses, um den zeitlichen Kontrast (C) von diesem zu messen, wobei der optische Impuls einen Sockel (I) und eine Haupt-Spitze (II) auf dem Sockel umfasst, wobei die Vorrichtung **dadurch gekennzeichnet ist, dass** sie umfasst:

- eine optische Trennvorrichtung (2), umfassend einen Eingangspfad zum Empfangen des optischen Impulses sowie einen ersten und einen zweiten Ausgangspfad, um die Hauptspitze bzw. wenigstens einen Teil des Sockels zu liefern, wobei der Teil für die Messung des zeitlichen Kontrastes verwendet wird,
- eine Vorrichtung zum zeitlichen Versatz (4), um die Hauptspitze und den Teil des Sockels in Bezug zueinander zeitlich zu versetzen,
- eine Dämpfungsvorrichtung (6), um die Hauptspitze auf solch eine Weise zu dämpfen, dass die jeweiligen Niveaus der Hauptspitze und des Teils des Sockels in der gleichen Größenordnung liegen, und
- eine optische Multiplexvorrichtung (8), um die so gedämpfte Hauptspitze und den in Bezug auf die Hauptspitze so zeitlich versetzten Teil des Sockels zu bündeln, wobei der Kontrast also gleich dem Verhältnis von dem Maß des Niveaus der Hauptspitze zu dem Maß des Niveaus von dem Teil des Sockels ist, wobei die Niveaus der Hauptspitze und des Teils des So-ckels um die Dämpfungen korrigiert sind, denen sie jeweils in der Vorrichtung zur Verarbeitung unterzogen wurden,

wobei die optische Trennvorrichtung (2) einen optischen Amplitudenmodulator (32) umfasst, mit einem Eingang, welcher den Eingangspfad bildet, um den optischen Impuls zu empfangen, und mit einem ersten und zweiten Ausgang, die komplementär zueinander sind und den ersten bzw. den zweiten Ausgangspfad bilden, um die Hauptspitze bzw. den Teil des Sockels zu liefern, wenn ein zu diesem Zweck vorgesehenes Steuersignal auf den Modulator (32) angewendet wird.

**7.** Vorrichtung nach einem der Ansprüche 1 bis 6, wobei die Vorrichtung zum zeitlichen Versatz (4) eine optische Faser (20) umfasst.

**8.** Vorrichtung nach einem der Ansprüche 1 bis 7, wobei die Multiplexvorrichtung (8) einen optischen Koppler (22) umfasst.

**9.** Vorrichtung nach einem der Ansprüche 1 bis 8, wobei die Dämpfungsvorrichtung (6) einstellbar ist.

**10.** System zur Messung des zeitlichen Kontrastes von einem optischen Impuls, umfassend:

- die Vorrichtung zur Verarbeitung des optischen Impulses nach einem der Ansprüche 1 bis 9,
- eine Photodetektionsvorrichtung (26), um die Hauptspitze und den Teil des Sockels zu detektieren, die gebündelt worden sind, und um ein elektrisches Signal zu liefern, das repräsentativ für die jeweiligen Niveaus der Hauptspitze und des Teils des Sockels ist, und
- eine elektronische Verarbeitungsvorrichtung (28), um das elektrische Signal zu verarbeiten, um den Wert des Kontrastes zu bestimmen.

**11.** Vorrichtung nach Anspruch 10, wobei die elektronische Verarbeitungsvorrichtung (28) ein Oszilloskop (30) oder einen Digitalisierer umfasst.

**Claims**

1. Device for processing an optical pulse to measure the temporal contrast (C) of this pulse, the optical pulse comprising a pedestal (I) and a main peak (II) on the pedestal, the device being **characterised in that** it comprises:

   - an optical separation device (2), comprising an input channel that receives the optical pulse, and first and second output channels to provide the main peak and at least part of the pedestal respectively, the part that is used to measure the temporal contrast,
   - a temporal shift device (4) to create a temporal shift between the main peak and the part of the pedestal,
   - an attenuation device (6) to attenuate the main peak such that the corresponding levels of the main peak and the part of the pedestal are of the same order of magnitude, and
   - an optical multiplexing device (8) to multiplex the main peak thus attenuated and the part of the pedestal temporally shifted relative to the main peak, the contrast then being equal to the ratio of the measurement of the level of the main peak to the measurement of the level of the part of the pedestal, the levels of the main peak and the part of the pedestal being corrected by the attenuations applied to them in the processing device,

   in which the optical separation device (2) comprises:

   - an optical division device (10) with one input forming the input channel that receives the optical pulse, and first and second outputs to provide first and second replicas respectively of the optical pulse, the first output being connected to the first output channel, and
   - an optical amplitude modulation device (12) with an input connected to the second output, and an output connected to the second output channel, designed to eliminate the main peak from the second replica and to allow only the part of the pedestal to pass when a control signal provided for this purpose is applied to it.

2. Device according to claim 1, further comprising a trigger device (14) to trigger the modulation device (12) by the main peak of the optical pulse.

3. Device according to claim 2, in which the trigger device (14) comprises:

   - an optical coupler (16) to sample a part of the first replica, and
   - an opto-electrical conversion device (18) that receives the part thus sampled and outputs an electrical signal representative of it,

   and in which the modulation device (12) is controlled by the electrical signal.

4. Device according to any one of claims 1 3, in which the duration of the control signal applied to the optical amplitude modulation device (12) is sufficient so that the optical amplitude modulation device (12) also eliminates the part of the optical pulse in which the first replica of the optical pulse will be recombined with the output signal from the optical amplitude modulation device (12).

5. Device according to any one of claims 1 to 4, in which the control signal of the optical amplitude modulation device (12) is proportional to the optical pulse.

6. Device for processing an optical pulse to measure the temporal contrast (C) of this pulse, the optical pulse comprising a pedestal (I) and a main peak (II) on the pedestal, the device being **characterised in that** it comprises:

   - an optical separation device (2), comprising an input channel that receives the optical pulse, and first and second output channels to provide the main peak and at least part of the pedestal respectively, the part that is used to measure the temporal contrast,
   - a temporal shift device (4) to create a temporal shift between the main peak and the part of the pedestal,
   - an attenuation device (6) to attenuate the main peak such that the corresponding levels of the main peak and the part of the pedestal are of the same order of magnitude, and
   - an optical multiplexing device (8) to multiplex the main peak thus attenuated and the part of the pedestal temporally shifted relative to the main peak, the contrast then being equal to the ratio of the measurement of the level of the main peak to the measurement of the level of the part of the pedestal, the levels of the main peak and the part of the pedestal being corrected by the attenuations applied to them in the processing device,

   in which the optical separation device (2) comprises an optical amplitude modulator (32), with an input that forms the input channel to receive the optical pulse, and first and second outputs that are complementary to each other and form the first and second output channels respectively to provide the main peak and the part of the pedestal respectively when a control signal provided for this purpose is applied to the modulator (32).

7. Device according to one of claims 1 to 6, in which the temporal shift device (4) comprises an optical fibre (20).

8. Device according to any one of claims 1 to 7, in which the multiplexing device (8) comprises an optical coupler (22).

9. Device according to any one of claims 1 à 8, in which the attenuation device (6) is tuneable.

10. System for measuring the temporal contrast of an optical pulse comprising:

   - the optical pulse processing device according to any one of claims 1 to 9,
   - a photodetection device (26) to detect the main peak and the part of the pedestal that were multiplexed and to output an electrical signal that is representative of the corresponding levels of the main peak and the part of the pedestal, and
   - an electronic processing device (28) to process the electrical signal in order to determine the value of the contrast.

11. Device according to claim 10, in which the electronic processing device (28) comprises an oscilloscope (30) or a digitiser.

FIG.1

FIG.2

FIG.3

FIG.4

FIG.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2899328
- US 8095017 B

- US 6320692 B

**Littérature non-brevet citée dans la description**

- Fibre-array-based detection scheme for single-shot pulse contrast characterisation. *Optics Letters,* 01 Septembre 2008, vol. 33 (17), 1969-1971